**Europäisches Patentamt**

**European Patent Office**

**Office européen des brevets**

(19)

(11) Veröffentlichungsnummer: **0 001 131**
**B1**

(12)

# EUROPÄISCHE PATENTSCHRIFT

(21) Anmeldenummer: **78200126.7**

(22) Anmeldetag: **01.08.78**

(51) Int. Cl.³: **B 60 T 15/42, B 60 T 15/24**

(54) Dreidrucksteuerventil an einer indirekt wirkenden Druckluftbremse mit einem Beschleunigerventil

(30) Priorität: **08.09.77 CH 11010/77**

(43) Veröffentlichungstag der Anmeldung:
**21.03.79 Patentblatt 79/06**

(45) Bekanntmachung des Hinweises auf die Patenterteilung:
**28.05.80 Patentblatt 80/11**

(84) Benannte Vertragsstaaten:
**BE DE FR GB SE**

(56) Entgegenhaltungen:
**CH - A - 438 408**

(73) Patentinhaber: **Werkzeugmaschinenfabrik Oerlikon-Bührle AG**
**Birchstrasse 155**
**CH - 8050 Zürich (CH)**

(72) Erfinder: **Fasoli, Mario Comm. Dott. Ing.**
**Via Piccinotti, 89**
**I - 50129 Firenze (IT)**

Courier Press, Leamington Spa, England.

## Dreidrucksteuerventil an einer indirekt wirkenden Druckluftbremse mit einem Beschleunigerventil

Die Erfindung betrifft ein Dreidrucksteuerventil an einer indirekt wirkenden Druckluftbremse, mit einem Beschleunigerventil, das von einem Hauptsteuerkolben über einen ausschwenkbaren Hebel beim Bremsen im öffnenden Sinne betätigbar ist, und mit einer Entriegelungsvorrichtung zur Betätigung des ausschwenkbaren Hebels, welche zwei Kolben aufweist, wobei eine zwischen den beiden Kolben befindliche Kammer mit dem Bremszylinder verbunden ist, und der eine Kolben indirekt durch eine Feder belastet ist, und die dem einen Kolben gegenüberliegende Kammer mit der Atmosphäre verbunden ist.

Bei einem bekannten Beschleunigerventil dieser Art, gemäss der schweizerischen Patentschrift No. 438 408, wird das Beschleunigerventil durch die Entriegelungsvorrichtung geschlossen, sobald eine gewisse Luftmenge aus der Hauptluftleitung in eine Beschleunigerkammer geströmt ist. Zum Bremsen muss der Druck in der Hauptluftleitung abgesenkt werden. Zur Beschleunigung des Bremsvorganges wird mit Hilfe dieses bekannten Beschleunigerventiles nur eine bestimmte Menge Druckluft aus der Hauptluftleitung herausgelassen. Dies hat den Nachteil, dass wenn das bekannte Beschleunigerventil an Hauptluftleitungen von kleinem und grossem Durchmesser angeschlossen wird, der Druck in der Hauptluftleitung mit kleinem Durchmesser stärker abgesenkt wird als in der Hauptluftleitung mit grossem Durchmesser.

Die vorliegende Erfindung bezweckt die Schaffung eines Beschleunigerventiles, bei dem solange Druckluft aus der Hauptluftleitung herausgelassen wird, bis der Druck im Bremszylinder auf einen vorbestimmten Wert angestiegen ist. Das Beschleunigerventil muss jedoch wieder geschlossen werden Können, wenn der Druck im Bremszylinder aus irgend einem Grunde nicht auf den erwähnten Wert ansteigt, obwohl der Druck in der Hauptluftleitung absinkt, damit der Druck in der Hauptluftleitung nicht zu schnell absinkt, Schliesslich soll beim Bremslösen das Beschleunigerventil erst wieder ansprechen, wenn der Druck im Bremszylinder einen wesentlich niedrigeren Wert erreicht als beim Bremsen zum Ausschalten des Beschleunigers erforderlich ist.

Das Bremsbeschleunigerventil, das alle diese Forderungen erfüllt, ist dadurch gekennzeichnet, dass die beiden Entriegelungskolben durch einen grossen Kolben und einen kleinen Kolben gebildet werden, dass der grosse Kolben im entriegelnden Sinne durch eine Feder belastet und die dem grossen Kolben der genannten Kammer gegenüberliegende Kammer durch eine Drossel mit der genannten Kammer verbunden ist.

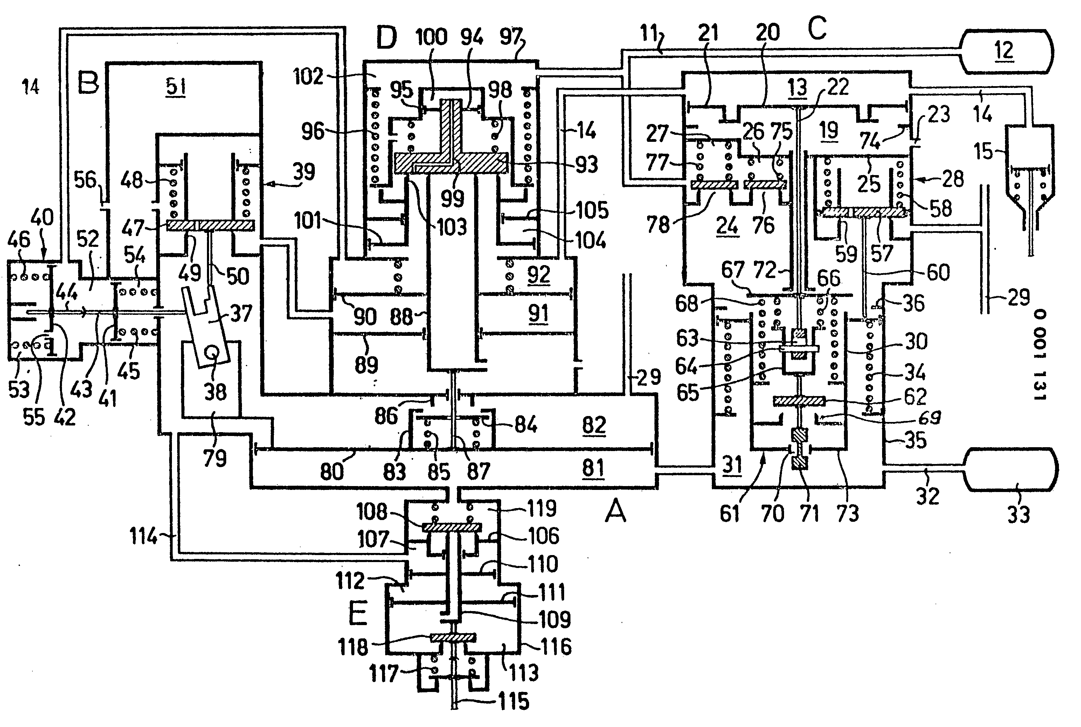

Das in der einzigen Figur der Zeichnung dargestellte Steuerventil weist ein Hauptsteuerorgan A, einen Beschleuniger B, ein Füll- und Abschlussorgan C, einen Höchstdruckbegrenzer D sowie ein Auslöseventil E auf. Das Füll- und Abschlussorgan C ist Gegenstand der europäischen Patentanmeldung 78 200 125.9 (Oerlikon-Bührle) und vom vorliegenden Patentbegehren ausgeschlossen. Dieses Organ C weist eine erste Kammer 13 auf, welche über eine Leitung 14 mit einem Bremszylinder 15 verbunden ist. Diese Kammer 13 ist von einer zweiten Kammer 19 durch einen zweiteiligen Kolben 20, 21 getrennt.

Der scheibenförmige innere Teil 20 ist an einer Kolbenstange 22 befestigt. Der ringförmige äussere Teil 21 stützt sich auf dem inneren Teil 20 ab und wird durch den Druck in der Kammer 13 gegen den inneren Teil 20 angepresst. Die zweite Kammer 19 ist durch eine Oeffnung 23 ständig mit der Atmosphäre verbunden. Die zweite kammer 19 ist von einer dritten Kammer 24 durch eine Trennwand 25 begrenzt. Die dritte Kammer 24 ist über zwei Rückschlagventile 26 und 27 und über eine Leitung 11 mit einem Hilfsluftbehälter 12 verbunden. Ferner ist die dritte Kammer 24 über ein Einlassventil 28 mit einer Hauptluftleitung 29 verbunden. Die dritte Kammer 24 ist durch einen zweiten Kolben 30 von einer vierten Kammer 31 abgegrenzt. Die vierte Kammer 31 ist über eine Leitung 32 mit einem Steuerluftbehälter 33 verbunden. Eine Feder 34, welche sich einerseits am Kolben 30 und anderseits am Gehäuse 35 des Füllund Abschlussorganes abstützt, hat das Bestreben, den zweiten Kolben 30 gegen einen Anschlag 36 des Gehäuses 35 zu drücken. Die Feder 34 ist so dimensioniert, dass sie sich bei einer Druckdifferenz zwischen der dritten und vierten Kammer 24 und 31 von 0,2 bar verschieben lässt. Der Beschleuniger B weist einen Kolben 79 auf, an dem ein gabelförmiger Betätigungsebel 37 um eine Achse 38 schwenkbar befestigt ist. Der eine Arm des gabelförmigen Betätigungshebels 37 wirkt mit einem Beschleunigungsventil 39 zusammen. Am anderen Arm des gabelförmigen Betätigungshebels 37 stützt sich ein Verriegelungsorgan 40 ab. Dieses Verriegelungsorgan 40 weist einen kleinen Kolben 41 und einen grossen Kolben 42 auf. Am kleinen Kolben 41 ist eine Kolbenstange 43 befestigt, dessen eines Ende sich am erwähnten Arm des Betätigungshebels 37 abstützt und dessen anderes Ende sich an einer Kolbenstange 44 des grossen Kolbens 42 abstützen kann. Eine erste Feder 45, die sich einerseits am kleinen Kolben 41 und anderseits am Gehäuse des Verriegelungsorgans 40 abstüzt, hat das Bestreben, den kleinen Kolben 41 vom Betätigungshebel 37 weg mit der Kolbenstange 43 gegen die Kolbenstange 44 zu drüken. Eine zweite Feder 46, die sich einerseits am grossen Kolben 42 und anderseits am Gehäuse des Verriegelungsorgans 40 abstützt, hat das Bestreben, den grossen Kolben 42 mt der Kolbenstange 44 gegen die Kolbenstange 43 des kleinen Kolbens 41 zu drücken, wodurch dieser gegen den Betätigungshebel 37 gedrükt wird. Eine nicht largestellte Feder hat das Bestreten, den Betätigungshebel 37 in die gezeigte Stellung zu schwenken.

Durch die beiden Kolben 41 und 42 wird das Gehäuse des Verriegelungsorganes 40 in drei Kammern 52, 53 und 54 unterteilt. Die mittlere, zwischen den beiden Kolben 41 und 42 befindliche Kammer 52 ist über Leitung 14 mit dem Bremszylinder verbunden. Die durch den grossen Kolben 42 abgegrenzte Kammer 53 ist über eine Drossel 55 im Kolben 42 mit der mittleren Kammer 52 verbunden, und die durch den kleinen Kolben 41 abgegrenzte Kammer ist durch eine nicht dargestellte Oeffnung mit der Atmosphäre verbunden.

Das Beschleunigungsventil 39 weist einen Ventilteller 47 auf, der durch eine Feder 48 gegen einen Ventilsitz 49 gedrückt wird. Am Ventilteller 47 ist ein Stössel 50 befestigt, der sich auf dem Betätigungshebel 37 abstützen kann. Das geöffnete Beschleunigungsventil 39 verbindet die Kammer 82 des Hauptsteuerorganes A mit einer Beschleunigungskammer 51, welche über eine Drossel 56 mit der Atmosphäre verbunden ist. Das Beschleunigungsventil 39 ist vollständig im Gleichgewicht, d.h. dass die Drücke zu beiden Seiten des Ventiltellers 47 immer gleich gross sind und immer an gleich grossen Flächen angreifen, derart, dass zum Oeffnen des Ventiles 39 nur die Kraft der Feder 48 zu überwinden ist.

Das Einlassventil 28 ist ähnlich aufgebaut wie das soeben beschriebene Beschleunigungsventil 39. Ein Ventilteller 57 wird durch eine Feder 58 gegen einen Ventilsitz 59 im Gehäuse gedrückt. Am Ventilteller 57 ist ein Ventilstössel 60 befestigt, der sich auf dem Kolben 30 abstützen kann. Das geöffnete Einlassventil verbindet die Hauptluftleitung 29 mit der dritten Kammer 24 des Füllund Abschlussorganes. Auch das Einlassventil 28 ist vollständig im Gleichgewicht, d.h. dass die Drücke zu beiden Seiten des Ventiltellers 57 immer gleich gross sind und immer an gleich grossen Flächen angreifen, derart, dass zum Oeffnen des Einlassventiles 28 ur die Kraft der Feder 58 zu überwinden ist.

Schliesslich ist im zweiten Kolben 30 noch ein weiteres Ventil 61 angeordnet, das einen Ventilteller 62 aufweist, der verschiebbar an der Kolbenstange 22 befestigt ist. Zu diesem Zweck ist am unteren Ende der Kolbenstange 22 ein Langloch 63 vorhanden, durch das ein Stift 64 ragt, der an einer Hülse 65 befestigt ist, die ihrerseits starr mit dem Ventilteller 62 verbunden ist. Eine Feder 66, welche sich einerseits an einem Anschlag 67 der Kolbenstange 22 und anderseits an der Hülse 65 abstützt, hat das Bestreben, den an der Hülse 65 befestigten Stift 64 gegen das untere Ende des Langloches 63 zu stossen. Eine weitere Feder 68, welche sich einerseits im Anschlag 67 der Kolbenstange 22 und anderseits am zweiten Kolben 30 abstützt, ermöglicht eine gewisse Relativbewegung zwischen dem ersten Kolben 20 und dem zweiten Kolben 30. Der erwähnte Ventilteller 62 kann daher mit einem Ventilsitz 69 am Kolben 30 zusammenwirken. Unterhalb des Ventilsitzes 69 ist am Kolben 30 noch eine Drosselöffnung 70 vorhanden, die auch als Empfindlichkeitsöffnung bezeichnet wird. Diese Drosselöffnung 70 arbeitet mit einem Drosselkörper 71 zusammen, der am Ventilteller 62 befestigt ist. Dieser Drosselkörper 71 ist—wie aus der Zeichnung ersichtlich ist—so ausgebildet, dass in der gezeigten Mittelstellung der Durchlassquerschnitt zwischen Drosselkörper 71 und Drosselöffnung 70 am grössten ist. Bei einer Relativbewegung zwischen Drosselkörper 71 und Drosselöffnung 70, in der einen oder anderen Richtung, wird dieser Durchlassquerschnitt kleiner.

Eine an der Trennwand 25 besfestigte Hülse 72 wirkt mit dem Anschlag 67 der Kolbenstange 22 zusammen und begrenzt den Hub der Kolbenstange 22 nach oben. Eine am Kolben 30 befestigte Hülse 73 wirkt ebenfalls mit dem Anschlag 67 zusammen und ermöglicht, dass der in Kammer 13 auf den Kolben 20 ausgeübte Druck über die Kolbenstange 22 auf de zweiten Kolben 30 übertragen werden kann. Der Hub des ringförmigen Teiles 21 des ersten Kolbens 20, 21 ist nach unten durch einen Anschlag 74 des Gehäuses 35 begrenzt.

Die erwähnten beiden Rückschlagventile 26 und 27, welche in ihrer geöffneten Stellung die Kammer 24 mit dem Hilfsluftbehälter 12 verbinden, unterscheiden sich dadurch, dass das Rückschlagventil 26 eine relativ schwache Feder 75 und eine kleine Durchlassöffnug 76 aufweist, während das Rückschlagventil 27 eine relativ starke Feder 77 und eine grosse Durchlassöffnung 78 besitzt.

Das Hauptsteuerorgan A weist einen Höchstdruckbegrenzer D auf und ist mit einem Auslöseorgan E verbunden. Das Hauptsteuerorgan besitzt einen Steuerkolben 80, der eine untere Kammer 81 von einer oberen Kammer 82 abgrenzt. Die untere Kammer 81 ist über Kammer 31 und Leitung 32 mit dem Steuerluftbehälter 33 verbunden, und die obere Kammer 82 ist direkt mit der Hauptluftleitung 29 verbunden. Am Steuerkolben 80 ist eine Hülse 83 befestigt, an der eine ringförmige Scheibe 84 unter der Kraft einer Feder 85 anliegt. Die Scheibe 84 wirkt mit einem ortsfesten Anschlag 86 zusammen. Am Steuerkolben 80 ist über eine Stange 87 ein ohler Stössel 88 befestigt. Der Stössel 88 ragt durch eine Trennwand 89 hindurch und weist einen Kolben 90 auf, der eine Kammer 91 von einer Kammer 92 abgrenzt. Die Kammer 91 ist bei geöffnetem Beschleunigungsventil 39 über Kammer 82 direkt mit der Hauptluftleitung 29 verbunden. Die Kammer 92 ist über Leitung 14 und Kammer 13 des Fll- und Abschlussorganes C mit dem Bremszylinder 15 verbunden.

Der Höchstdruckbegrenzer D weist einen Ventilteller 93 auf, an dem ein Kolben 94 befestigt ist. Der Ventilteller 93 mit dem Kolben 94 ist verschiebbar in einer topfförmigen Hülse 95 angeordnet. Eine Feder 96, die sich einerseits am Gehäuse 97 und anderseits an der Hülse 95 abstützt, hat das Bestreben, die Hülse 95 nach unten zu drücken und eine Feder 98, die sich einerseits an der Hülse 95 und anderseits an dem Ventilteller 93 abstützt, hat das Bestreben, den Ventilteller 93 gegen den Stössel 88 zu drücken. Eine Bohrung 99 im Ventilteller 93 verbindet die Kammer 92 mit einer Kammer 100 zwischen dem Kolben 94 und der topfförmigen Hülse 95. Ein hülsenförmiger Kolben 101 grenzt die erwähnte Kammer 92 von einer Kammer 104 ab, die mit der Atmosphäre verbunden ist. Eine Trennwand 105, die am Gehäuse 97 befestigt ist, grenzt die Kammer 104 von einer weiteren Kammer 102 ab, die über Leitung 11 mit dem Hilfsluftbehälter 12 verbunden ist. Der hülsenförmige Teil des Kolbens 101 bildet einen Ventilsitz 103, der mit dem Ventilteller 93 zusammen wirkt.

Das Auslöseventil E dient zur Entlüftung der Kammer 81 und des Steuerluftbehälters 33 und weist eine oberste Kammer 119 auf, die mit der untersten Kammer 81 des Hauptsteuerorgans A verbunden ist. Die Kammer 119 ist durch eine Trennwand 106 von einer weiteren Kammer 107 getrennt. Die Trennwand 106 bildet zugleich einen Ventilsitz für einen Ventilteller 108. Ein Stössel 109, der zur Betätigung des Ventiltellers 108 dient, verbindet einen kleinen Kolben 110 mit einem grossen Kolben 111. Der kleine Kolben 110 grenzt die erwähnte Kammer 107 von einer Kammer 112 ab, die mit der Atmosphäre verbunden ist, und der grosse Kolben 111 grenzt die Kammer 112 von einer untersten Kammer 113 ab, welche über den hohlen Stössel 109 bei abgehobenem Ventilteller 108 mit der Kammer 119 verbunden ist. Die mittlere Kammer 107 ist über eine Leitung 114 mit der Kammer 82 des Hauptsteuerorgans A verbunden. Ein Auslösehebel 115 ist schwenkbar im Gehäuse 116 des Auslöseventiles E gelagert und durch eine Feder 117 in seinr untersten Stellung gehalten. Der Auslösehebel 115 dient zur Betätigung des Stössels 109, der an seinem unteren Ende einen Ventilteller 118 aufweist, der die Kammer 113 gegenüber der Atmosphäre abschliesst.
Die Wirkungsweise des beschriebenen Beschleunigerventiles ist wie folgt.

### Der Bremsvorgang

Zum Bremsen wird der Druck in der Hauptluftleitung 29 abgesenkt, und das Beschleunigerventil 39 hat die Aufgabe, das Absenken des Luftdruckes in der Hauptluftleitung 29 zu beschleunigen. Sobald der Druck in der Hauptluftleitung 29 sinkt, dann wird auch der Druck in der Kammer 82 oberhalb des Steuerkolbens 80 sinken, und der Steuerkolben 80 wird sich aufwärts bewegen, bis zwischen den Kammern 82 und 81 beidseits des Steuerkolbens 80 Gleichgewicht herrscht. Mit dem Anheben des Steuerkolbens 80 wird auch der Betätigungshebel 37, der um die Achse 38 schwenkbar am Steuerkolben 80 angelenkt ist, angehoben und stösst über den Stössel 50, den Ventilteller 47, entgegen der Kraft der Feder 48 nach oben, wodurch der Ventilteller 47 von seinem Ventilsitz 49 abgehoben wird. Somit strömt die Luft aus der Kammer 82 und aus der Hauptluftleitung 29 in die Beschleunigerkammer 51 und durch die Drossel 56 in die Atmosphäre. Das Hauptsteuerorgan A und der Höchstdruckbegrenzer D lassen durch die Aufwärtsbewegung des Steuerkolbens 80 Druckluft aus dem Hilfsluftbehälter 12 über Leitung 11, Kammer 102, Kammer 92, Leitung 14, Kammer 13, in den Bremszylinder 15 strömen. Gleichzeitig gelangt aus der Kammer 92 über eitung 14 Druckluft in die Kammer 52 des Entriegelungsorganes 40, wodurch ein Druck auf die beiden Kolben 42 und 41 ausgeübt wird. Die Feder 46 wird dabei komprimiert. Diese Feder 46 ist so bemessen, dass sie z.B. bei einem Druck von 0,25 bar nachgibt. Ebenso wird auch die Feder 45 komprimiert. Diese Feder 45 ist zusammen mit dem kleineren Kolben 41 so bemessen, dass z.B. bei einem Druck von 0,75 bar nachgibt. Bei diesem Druck wird sich dann der Kolben 41 nach rechts verschieben und den Betätigungshebel 37 im Uhrzeigersinne verschwenken. Durch die Verschwenkung des Betätigungshebels 37 schliesst sich das Beschleunigeventil 39, da sich der Stössel 50 nicht mehr auf dem betätigungshebel 39 abstützen kann, und die Feder 48 den Ventilteller 47 auf den Ventilsitz 49 herunterdrückt. Das Bescheunigerventil 39 wird somit in der Regel bei einem Druck von 0,75 bar im Bremszylinder 15 geschlossen.

Falls nun durch irgend einer Störung der Druck im Bremszylinder 15 nicht auf diesen Druck von 0,75 bar ansteigt, dann mus verhindert werden, dass die Hauptluftleitung 29 durch das Beschleunigerventil 39 vollständigentlüftet wird. Dies geschieht wie folgt.

Die in der Kammer 52 zwischen den beiden Kolben 41 und 42 vorhandene Luft strömt langsam durch die Drossel 55 in die Kammer 53 auf der anderen Seite des grossen Kolbens 42, bis in den beiden Kammern 52 und 53 zu beiden Seiten des Kolbens 42 Gleichgewicht herrscht. Die Drossel 55 ist z.B. so bemessen, dass sich nach 3 Sekunden ein Druck von 0,25 bar in der Kammer 53 aufgebaut hat. Sobald zu beiden Seiten des Kolbens 42 der gleiche Druck von 0,25 bar herrscht, dann ist die Feder 46 in der Lage, den grossen Kolben 42 nach rechts zu verschieben und über den Stössel 43 eine Kraft auf den kleinen Kolben 41 auszuüben.

Auf den kleinen Kolben 41 wirkt aber ausserdem noch der Druck von 0,25 bar, der in der Kammer 52 herrscht. Beide Kräfte zusammen—die Kraft der Feder 46 und der Druck von 0,25 bar in Kammer 52—sind nun in der Lage, den kleinen Kolben 41 entgegen der Kraft der Feder 54 nach rechts zu verschieben und den Betätigungshebel 37 im Uhrzeigersinne zu schwenken. Somit schliesst sich das Beschleunigerventil 39 entweder bei einem Druck von 0,75 in der Kammer 52 oder, wenn dieser Druck innerhalb 3 Sekunden *nicht* erreicht wird, bei einem Druck von 0,25 bar. Auf diese Weise kann ein unbeabsichtigtes Ausströmen der Druckluft aus der Hauptluftleitung 29 vermieden werden.

Der Lösevorgang

Solange der Druck im Bremszylinder 15 höher als z.B. 0,25 bar ist, bleibt das Beschleunigerventil 39 entriegelt, d.h. der Betätigungshebel 37 steht nicht im Eingriff mit dem Stössel 50, des Ventiltellers 47. Beim Absenken des Luftdruckes im Bremszylinder 15 und somit in der Kammer 52 der Entriegelungsvorrichtung kann der Druck in Kammer 53 niemals kleiner sein als in Kammer 52; die Feder 46 wird daher immer wirksam sein. Somit kann das Beschleunigerventil 39 erst beim Absinken des Druckes auf den kleineren Wert von 0,25 bar und nicht schon beim grösseren Wert des Druckes von 0,75 weider eingeschaltet werden.

**Patentanspruch**

Dreidrucksteuerventil an einer indirekt wirkenden Druckluftbremse, mit einem Beschleunigerventil (39), das von einem Hauptsteuerkolben (80) über einen ausschwenkbaren Hebel (37) beim Bremsen im öffnenden Sinne betätigbar ist, und mit einer Entriegelungsvorrichtung (40) zur Betätigung des ausschwenkbaren Hebels (37), welche zwei Kolben (41, 42) aufweist, wobei eine zwischen den beiden Kolben (41, 42) befindliche Kammer (52) mit dem Bremszylinder (15) verbunden ist, und der eine Kolben durch eine Feder (45) belastet ist, und eine dem einen Kolben (41) gegenüberliegende Kammer (54) mit der Atmosphäre verbunden ist, dadurch gekennzeichnet, dass die beiden Entriegelungskolben durch einen grossen Kolben (42) und einen kleinen Kolben (41) gebildet werden, dass der grosse Kolben (42) im entriegelnden Sinne durch eine Feder (46) belastet und eine dem grossen Kolben (42) der genannten Kammer (52) gegenüberliegende Kammer (53) durch eine Drossel (55) mit der genannten Kammer (52) verbunden ist.

**Revendication**

Soupape de commande à trois pressions associée à un frein à air comprimé à action indirecte et comportant une soupape accélératrice (39), qui est susceptible d'être actionnée lors du freinage dans le sens de l'ouverture par un piston de commande principal (80) et par l'intermédiaire d'un levier basculant (37), soupape comportant un dispositif de déverrouillage (40) pour l'actionnement du levier basculant (37), dispositif comportant deux pistons (41, 42), une chambre (52) située entre les deux pistons (41, 42) étant reliée au cylindre de frein (15), l'un des pistons étant sollicité par un ressort (45) et une chambre (54) située en face de l'un (41) des pistons étant reliée à l'atmosphère, soupape de commande caractérisée en ce que les deux pistons de déverrouillage sont constitués par un grand piston (42) et un petit piston (41), le grand piston (42) étant sollicité dans le sens du déverrouillage par un ressort (46) et une chambre (53) opposée par rapport au grand piston (42) à la chambre précitée (52) étant reliée à cette chambre précitée (52) par un étranglement (55).

**Claim**

A control valve for an indirectly acting compressed air-brake comprising: A quick service intensifier valve (39) which, on braking, can be opened by a main control piston (80) via a lever (37) which is rockable by an unlocking device (40), said unlocking device (40) having two pistons (41, 42), a first chamber (52) between said two pistons (41, 42) is connected to the brake cylinder (15) and one piston (41) is loaded by a first spring (45) and a second chamber (54) on the other side of said piston (41) is connected to the atmosphere, characterised in that the two unlocking pistons (41, 42) consist of a large piston (42) and a small piston (41) and the large piston (42) is loaded in the unlocking direction by a spring (46) and third chamber (53) opposite to said first chamber (52) on the other side of said large piston (42) is connected by a throttle (55) with said first chamber (52).

0 001 131